# EUROPEAN PATENT SPECIFICATION

(11) **EP 3 805 106 B1**
(45) Date of publication and mention of the grant of the patent: **01.02.2023**
(21) Application number: 20192832.2
(22) Date of filing: 26.08.2020
(51) Int. Cl.: B64D 17/80, B64C 39/02, B64D 17/70

(54) **UNMANNED AIRCRAFT SYSTEM CAPABLE OF AUTONOMOUS FLIGHT**
UNBEMANNTES FLUGZEUGSYSTEM MIT AUTONOMEM FLUG
SYSTÈME D'AÉRONEF SANS PILOTE CAPABLE DE VOL AUTONOME

(30) Priority: 10.10.2019 KR 20190125128
(43) Date of publication of application: 14.04.2021
(73) Proprietor: Awesome Tech Inc., Daejeon 34129 (KR)
(72) Inventor: Hwang, Sang Yun, 35074 Daejeon (KR)
(74) Representative: Isarpatent

(56) References cited:
- WO-A1-2018/190319
- WO-A1-2019/139073
- FR-A1- 3 074 144
- JP-A- 2018 043 647
- US-B1- 6 338 457

## Description

### BACKGROUND OF THE INVENTION

### Field of the Invention

The present disclosure relates generally to an unmanned aircraft system and, more particularly, to an unmanned aircraft system which has a glide function as well as a parachute function, so that in an emergency situation, such as a fall thereof, the unmanned aircraft system can be assisted to glide a safe place, thus avoiding the fall situation.

### Description of the Related Art

At the beginning period of unmanned aircraft systems, such unmanned aircraft systems (for example, drones) were primarily used for military purposes, but now unmanned aircraft systems are used in various fields, such as distribution delivery, disaster rescue, broadcasting, leisure and the like, thanks to their convenience and quickness.

However, the unmanned aircraft systems often fall into unexpected regions or regions deviated from their pathways due to a change in external environments, such as rains or winds, and unskilled manipulation. Accordingly, expensive major parts of the unmanned aircraft system may be damaged or enter a nonrecoverable state, incurring loss to users.

In order to eliminate the above-described drawbacks, the unmanned aircraft system may be provided with an air resistance member, such as a parachute. Conventionally, in most cases, mechanical mechanisms utilizing a motor are used to eject the parachute. However, in this case, relatively high power for driving the motor may be required to secure an initial torque. This may be an obstacle to reducing the sizes of the unmanned aircraft system because the motor requires a separate space for accommodating itself as well as consumes power of the unmanned aircraft system. Therefore, it is necessary to develop techniques for the unmanned aircraft system in which it is possible to protect the unmanned aircraft system, secure power for flight, and realize miniaturization thereof.

The foregoing is intended merely to aid in the understanding of the background of the present invention, and is not intended to mean that the present invention falls within the purview of the related art that is already known to those skilled in the art.

### Documents of Related Art

(Patent Document 1) Korean Patent Application Publication No. KR 10-2014-0038495 (Published on March 28, 2014)
(Patent Document 2) Korean Patent No. KR 10-1496892 (Registered on February 23, 2015)

Further relevant examples of the prior art are the following:
FR 3 074 144 A1 describes a drone with at least one parachute.
WO 2019/139073 A1 describes a flying apparatus.
WO 2018/190319 A1 describes an aerial vehicle.
JP 2018 043647 A describes an unmanned aircraft with a gliding function.
US 6 338 457 B1 describes a parachute recovery system.

### SUMMARY OF THE INVENTION

Accordingly, the present disclosure has been made keeping in mind the above problems occurring in the related art, and the present disclosure is intended to provide a glide module realizing a parachute function and an auxiliary glide function at the same time in the unmanned aircraft system.

In addition, another object of the present disclosure is to provide a glide module which provides an autonomous glide function even in an emergency situation such as a fall of the unmanned aircraft system, thereby assisting the unmanned aircraft system in gliding to a safe place and avoiding the fall situation.

The objectives of the present disclosure are not limited to the above-described objectives, and unmentioned or other objectives may be appreciated clearly from the following detailed description by a person having ordinary skill in the art to which the invention belongs.

The scope of the present invention is defined by the independent claim.

In order to achieve the above objectives, according to one aspect of the present disclosure, there is provided a glide module mounted to an unmanned aircraft system, which includes a container including a storage space therein; an air resistance member stored in the container; an ejection member performing ejection of the air resistance member; a glide member performing glide of the air resistance member; and a glide control member controlling the ejection member and the glide member, wherein the glide control member performs an autonomous flight under a previously input condition by controlling the glide of the air resistance member.

The air resistance member may be a parachute.

The ejection member includes an ejection assisting part which opens the container in an electrical manner.

The ejection assisting part includes an elastic device connected to the container and the air resistance member.

The elastic device is formed of a shape-memory alloy, and ejects the air resistance member to the outside of the container using an elastic force of the shape-memory alloy generated when the shape-memory alloy returns to its pre-deformed shape upon application of the electricity to the elastic device.

The glide member may adjust the air resistance member, and may further include an adjustment part which adjusts a flight speed or flight direction of the unmanned aircraft system to which the glide module is mounted.

The adjustment part may include a cord length adjustment device which can adjust lengths of a plurality of cords provided in the parachute and thus control operation direction or velocity of the parachute.

The previously input condition may be configured by the combination of at least one or more of flight altitude and tilting angle of the unmanned aircraft system to which the glide module is mounted, an external command received from a remote location, an amount of change per unit period of time in the flight altitude, an amount of change per unit period of time in the tilting angle, and an abnormal operation alarm of the unmanned aircraft system.

Further, in order to achieve the above objects, according to another aspect of the present disclosure, there is provided an unmanned aircraft system which includes the glide module and performs autonomous flight under the previously input condition.

The glide module may be embedded in and integrated with the unmanned aircraft system into a single body.

The glide module according to the embodiments of the present disclosure has an advantage of being able to provide a parachute function and an auxiliary glide function to the unmanned aircraft system at the same time, using the air resistance member such as a parachute. In addition, even in an emergency situation such as a fall of the unmanned aircraft system, an autonomous glide function can be executed, thereby assisting the unmanned aircraft system in gliding to a safe place and avoiding the fall situation.

### BRIEF DESCRIPTION OF THE DRAWINGS

The above and other objectives, features, and advantages of the present invention will be more clearly understood from the following detailed description taken in conjunction with the accompanying drawings, in which:
FIGS. 1 and 2 are perspective views of a glide module according to an embodiment of the present disclosure;
FIG. 3 is a perspective view illustrating an air resistance member of the glide module according to an embodiment of the present disclosure; and
FIG. 4 is a control flowchart showing a glide control member of the glide module according to an embodiment of the present invention.

### DETAILED DESCRIPTION OF THE INVENTION

Hereinafter, preferred embodiments of the present disclosure will be described in detail with reference to the attached drawings. Following embodiments are provided just as examples in order to sufficiently convey the conceptual idea of the disclosure to those skilled in the art. Therefore, the invention is not limited to the embodiments described below, but may be embodied in other forms which fall within the scope of the appended claims. Further, a length, thickness or the like of a layer and a region may be represented in an exaggerated manner in the drawings for the sake of convenience. Reference now should be made to the drawings, in which the same reference numerals are used throughout the different drawings to designate the same or similar components.

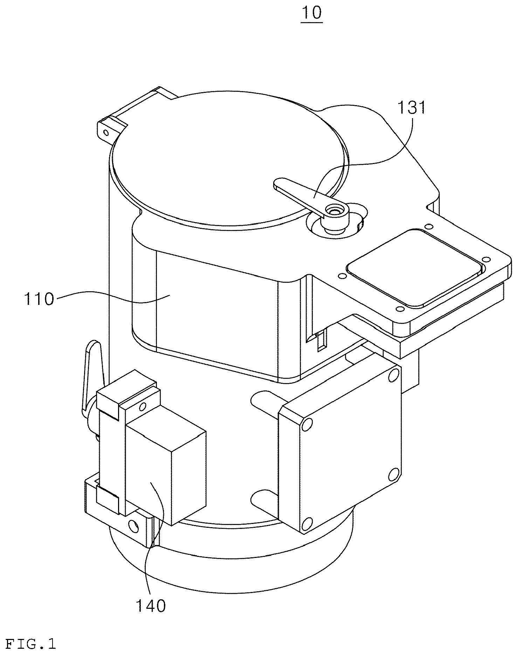

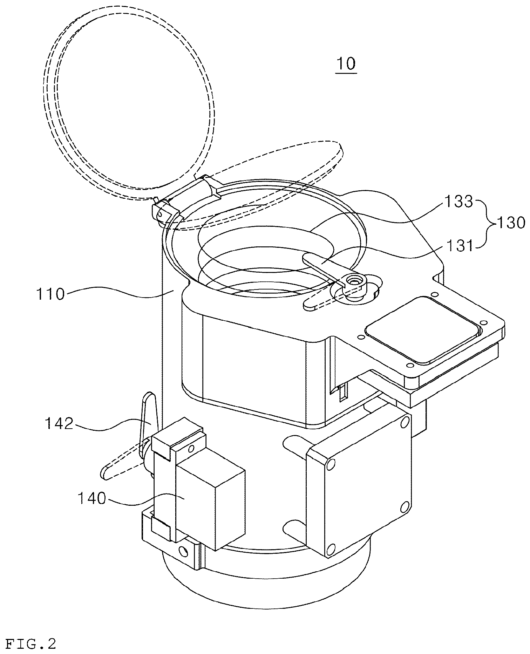

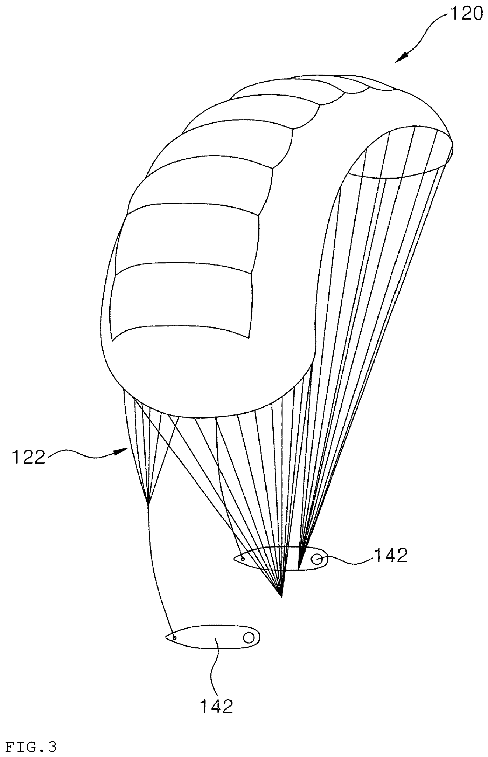

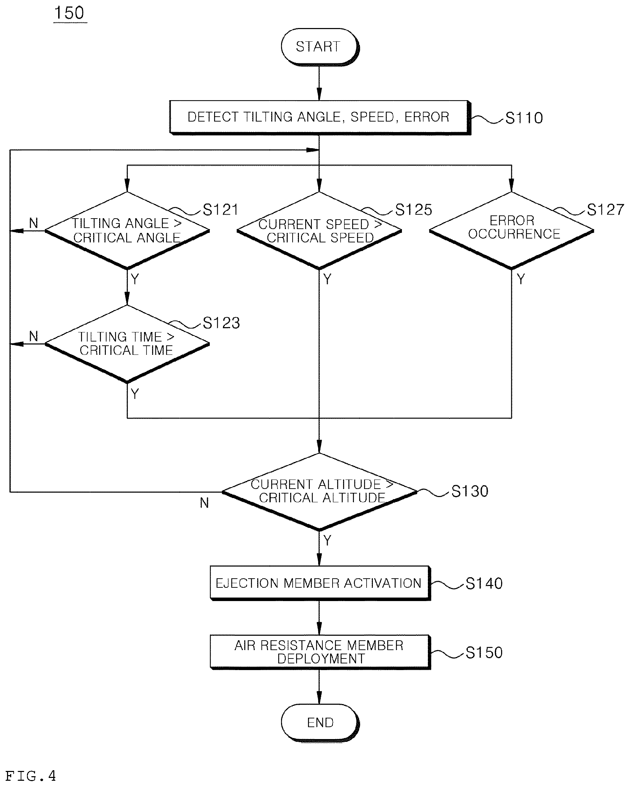

FIGS. 1 and 2 are perspective views of a glide module according to an embodiment of the present disclosure; FIG. 3 is a perspective view illustrating an air resistance member of the glide module according to an embodiment of the present disclosure; and FIG. 4 is a control flowchart showing a glide control member of the glide module according to an embodiment of the present invention.

Referring to FIGS. 1 to 4, the glide module 10 mounted to the unmanned aircraft system includes a container 110, an air resistance member 120, an ejection member 130, a glide member 140 and a glide control member 150.

In a particular example, the unmanned aircraft system may be a drone. Further, in this case, the unmanned aircraft system may include a rotary wing type drone or a fixed wing type drone.

The container 110 includes a storage space, in which the air resistance member 120 is stored. The air resistance member 120 may mean a separate structure which produces air resistance in order to prevent the abrupt fall of the unmanned aircraft system. As an example, the air resistance member 120 may be a parachute. Further, the air resistance member 120 may also function to enable the unmanned aircraft system to glide to a target position while preventing the abrupt fall of the unmanned aerial vehicle.

The ejection member 130 performs the ejection of the air resistance member 120 stored in the container 110. The ejection member 130 includes an ejection assisting part 131 which operates to open the container 110, and which opens the container 110 in an electrical manner. The electrical manner may be one in which an input from an electrical circuit is directly used for the opening of the container without a separate torque output device, such as a motor. Furthermore, the ejection assisting part 131 includes an elastic device 133 connected to the container 110 and the air resistance member 120. The elastic device 133 is formed of a shape-memory alloy, which returns to its pre-deformed shape when supplied with electricity. In other words, when electricity is supplied to the elastic device 133 formed of the shape-memory alloy via the guide control member 150, the shape-memory alloy is returned to its pre-deformed shape, generating an elastic force by which the air resistance member 120 is ejected out of the container 110. That is, the elastic device 133 is formed of a shape-memory alloy, and ejects the air resistance member 120 to the outside of the container 110 using the elastic force of the shape-memory alloy generated when it returns to its pre-deformed shape upon the application of the electricity to the elastic device 133.

For example, the pre-deformed shape of the shape-memory alloy of the elastic device 133 may be configured in such a form that it can open the container 110 so as to eject the air resistance member 120 to the outside of the container 110. That is, the elastic device may be in the form of a ring which suppresses the elastic force of a spring pressing the air resistance member 120 stored in the container 110, and which is unfolded to release the spring when electricity is applied thereto.

When the elastic device 133 is formed of the shape-memory alloy as described above, the glide module 10 can occupy a smaller space, thus realizing its miniaturization, when compared to a conventional type having the motor described in the related art section. This can decrease the height of the glide module 10, which in turn can contribute to a low profile thereof. Further, when the air resistance member 120 is a type of a glider, the low profiled ejection member 130 may improve glide efficiency because the height of the ejection member 130 may significantly affect the glide.

The glide member 140 performing the glide of the air resistance member 120 may further include an adjustment part 142 which adjusts a flight speed or flight direction of the unmanned aircraft system to which the glide module 10 is mounted, adjusting the air resistance member 120.

The adjustment part 142 may be provided in a variety of forms. When the air resistance member 120 is realized in a form of a parachute, the adjustment part may include a cord length adjustment device which can adjust the length of a plurality of cords 122 and thus operation direction or velocity of the parachute. More specifically, the parachute may include the plurality of cords 122 so that it may be configured to control the left and right direction change, or glide of the parachute. At this time, the adjustment part 142 may include a cord length adjustment device, so that the adjustment part can adjust the length of the plurality of cords 122 formed in the parachute described above. For example, the cord length adjustment device may be configured with a pair of brake cord manipulating devices, a driving device for driving the brake cord manipulating device, and a connecting device. Each of the pair of brake cord manipulating devices may be connected to the driving device at one end thereof and to the cords of the parachute at the opposite end thereof. Further, each of the pair of brake cord manipulating devices may be connected to the driving device so that each can independently rotate around the connecting device. As a result, by adjusting the parachute, that is, the air resistance member 120, via the cord length adjustment device, the speed and direction of the unmanned aircraft system may be adjusted to assist the autonomous flight of the unmanned aircraft system or direct it in a specific situation. The specific situation may include a case of loss of propulsion power of the unmanned aircraft system, a case of fall, a case of flight along an unexpected path, and the like.

The glide control member 150 that controls the ejection member 130 and the glide member 140 controls the glide of the air resistance member 120 so that the glide module 10 can perform the autonomous flight under a previously input condition. The autonomous flight may mean that the unmanned aircraft system flies under the previously input condition without a separate controller's/pilot's control so that gliding to the destination is possible. Specifically, the previously input condition may mean a condition under which the air resistance member 120 is ejected from the ejection member 130 in the unmanned aircraft system. That is, the present disclosure may provide the unmanned aircraft system which includes the glide module 10 and performs autonomous flight under the previously input condition.

As an example, the situation which triggers the ejection of the air resistance member 120 may include a case where the unmanned aircraft system loses thrust and falls, a case where the unmanned aircraft system needs to abruptly reduce its speed, and a case where there is a need that it intentionally glides using the air resistance member 120 when approaching the landing site to land.

Further, the previously input condition may be configured by the combination of at least one or more of flight altitude and tilting angle of the unmanned aircraft system to which the glide module 10 is mounted, an external command received from a remote location, the amount of change per unit period of time in the flight altitude, the amount of change per unit period of time in the tilting angle, and an abnormal operation alarm of the unmanned aircraft system. For example, when the flight altitude of the unmanned aircraft system is lower than a critical altitude lower limit or higher than a critical altitude upper limit, the glide control member 150 may control the ejection module 130 to operate. In addition, when the tilting angle of the unmanned aircraft system is greater than the critical angle, the ejection module 130 may be activated in the above-described manner. When it happens continuously more than a certain number of times, or lasts longer than a certain period of time that the amount of change per unit period of time in the flight altitude or the tilting angle is greater than the critical amount of change, the ejection module 130 may be activated. In addition, when the ejection module 130 is commanded to operate from a remote location through a separate external command, or when an abnormal operation alarm indicating that the operation of the unmanned aircraft system is abnormal is received, the ejection module 130 may be activated. Furthermore, the above-described main factors may be used as a criterion for determining whether or not the ejection module 130 is activated depending on one or a combination of the plurality of factors.

For example, referring to FIG. 4, the glide control member 150 may detect, in real time, a tilting angle, a speed, an error, or the like of the unmanned aircraft system to which the glide module 10 is mounted (S110).

The glide module 10 may be embedded in and integrated with the unmanned aircraft system into a single body. That is, the above-described glide module 10 may not only be mounted as a module separate from the unmanned aircraft system, but also may be provided integrally, and may be provided, for example, in the form of being embedded into the unmanned aircraft system.

Next, comparing the tilting angle of the unmanned aircraft system with the previously input critical angle (S121), comparing the current speed with the previously input critical speed (S125), or determining whether or not an error is detected (S127) may be performed simultaneously or separately. That is, the tilting angle, current speed, and error occurrence may be used as a criterion for determination depending on one or a combination of the plurality of factors.

When the tilting angle exceeds the critical angle, for example, 45 degree angle, a period of time when the tilting angle exceeds the critical angle (Hereinafter, referred to as a tilting time) may be compared with a critical time (S123). For example, the critical time may be preset to 1 second, with which the tilting time is compared, and when the tilting time exceeds the critical time, the current altitude may be compared with a critical altitude (S130).

After the above procedures, when the current altitude is higher than the critical altitude, the ejection member 130 may be activated (S140).

Next, the air resistance member 120 may be ejected due to the activated ejection member 130, and be deployed to the outside (S150). That is, when electricity is supplied to the elastic device 133 formed of the shape-memory alloy via the guide control member 150, so that the ejection member 130 is activated, the shape-memory alloy is returned to pre-deformed shape thereof and a resulting elastic force may cause the air resistance member 120 to be ejected out of the container 110.

Further, as another determination factor, the current speed may be compared with the previously input critical speed (S125). When the current speed is greater than the critical speed, the current altitude may be compared with the critical altitude (S130), and when the current altitude is higher than the critical altitude, the ejection member 130 may be activated (S140).

Furthermore, as still another determination factor, it may be determined whether the error is detected or not (S127). When the error is detected, the current altitude may be compared with the critical altitude (S130), and when the current altitude is higher than the critical altitude, the ejection member 130 may be activated (S140).

Therefore, the glide module according to the embodiments of the present disclosure has an advantage of being able to provide an auxiliary glide function to the unmanned aircraft system as well as a parachute function for protection of the unmanned aircraft system, using the air resistance member such as a parachute as described above. In addition, even in an emergency situation such as a fall of the unmanned aircraft system, an autonomous glide function can be provided, thereby assisting the unmanned aircraft system in gliding to a safe place and avoiding the fall situation.

Although the preferred embodiments of the present disclosure have been disclosed for illustrative purposes, those skilled in the art will appreciate that various modifications, additions and substitutions are possible, without departing from the scope of the invention as disclosed in the accompanying claims.

## Claims

1. A glide module (10) for being mounted to an unmanned aircraft system, the glide module (10) comprising:
a container (110) including a storage space therein;
an air resistance member (120) stored in the container (110);
an ejection member (130) performing ejection of the air resistance member (120);
a glide member (140) performing glide of the air resistance member (120); and
a glide control member (150) controlling the ejection member (130) and the glide member (140),
wherein the glide control member (150) is configured to perform an autonomous flight under a previously input condition by controlling the gliding of the air resistance member (120),
wherein the ejection member (130) comprises an ejection assisting part (131) which is configured to open the container (110) in an electrical manner,
wherein the ejection assisting part (131) comprises an elastic device (133) connected to the container (110) and the air resistance member (120),
**characterised in that**
the elastic device (133) is formed of a shape-memory alloy, and is configured to eject the air resistance member (120) to the outside of the container (110) using an elastic force of the shape-memory alloy generated when the shape-memory alloy returns to its pre-deformed shape upon application of the electricity to the elastic device (133).

2. The glide module (10) of claim 1, wherein the air resistance member (120) is a parachute.

3. The glide module (10) of claim 1, wherein the glide member (140) is configured to adjust the air resistance member (120), and further comprises an adjustment part (142) which is configured to adjust a flight speed or flight direction of the unmanned aircraft system to which the glide module (10) is to be mounted.

4. The glide module (10) of claim 3, wherein the adjustment part (142) comprises a cord length adjustment device which is configured to adjust lengths of a plurality of cords provided in the air resistance member (120) and thus control operation direction or velocity of the air resistance member (120).

5. The glide module (10) of claim 1, wherein the previously input condition is configured by the combination of at least one or more of flight altitude and tilting angle of the unmanned aircraft system to which the glide module (10) is mounted, an external command received from a remote location, an amount of change per unit period of time in the flight altitude, an amount of change per unit period of time in the tilting angle, and an abnormal operation alarm of the unmanned aircraft system.

6. An unmanned aircraft system comprising the glide module (10) of claim 1.

7. The unmanned aircraft system of claim 6, wherein the glide module (10) is embedded in and integrated with the unmanned aircraft system into a single body.

## Patentansprüche

1. Gleitmodul (10) zur Montage an einem unbemannten Luftfahrzeugsystem, wobei das Gleitmodul (10) umfasst:
einen Behälter (110), in dem sich ein Aufnahmeraum befindet;
ein Luftwiderstandselement (120), das in dem Behälter (110) aufgenommen ist;
ein Auswurfelement (130), welches das Auswerfen des Luftwiderstandselements (120) durchführt;
ein Gleitelement (140), welches das Gleiten des Luftwiderstandselements (120) bewirkt; und
ein Gleitsteuerelement (150), welches das Auswurfelement (130) und das Gleitelement (140) steuert,
wobei das Gleitsteuerelement (150) dafür ausgebildet ist, einen autonomen Flug unter einer zuvor eingegebenen Bedingung durch Steuern des Gleitens des Luftwiderstandselements (120) durchzuführen,
wobei das Auswurfelement (130) einen
Auswurfunterstützungsteil (131) umfasst, der dafür ausgebildet ist, den Behälter (110) auf elektrische Weise zu öffnen,
wobei der Auswurfunterstützungsteil (131) eine elastische Vorrichtung (133) umfasst, die mit dem Behälter (110) und dem Luftwiderstandselement (120) verbunden ist,
**dadurch gekennzeichnet, dass**
die elastische Vorrichtung (133) aus einer Formgedächtnislegierung gebildet ist und dafür ausgebildet ist, das Luftwiderstandselement (120) unter Einsatz einer elastischen Kraft der Formgedächtnislegierung, die erzeugt wird, wenn die Formgedächtnislegierung bei Anlegen der Elektrizität an die elastische Vorrichtung (133) in ihre vorverformte Form zurückkehrt, aus dem Behälters (110) auszuwerfen.

2. Gleitmodul (10) nach Anspruch 1, wobei das Luftwiderstandselement (120) ein Fallschirm ist.

3. Gleitmodul (10) nach Anspruch 1, wobei das Gleitelement (140) dafür ausgebildet ist, das Luftwiderstandselement (120) einzustellen, und des Weiteren einen Einstellteil (142) umfasst, der dafür ausgebildet ist, eine Fluggeschwindigkeit oder Flugrichtung des unbemannten Luftfahrzeugsystems, an dem das Gleitmodul (10) montiert werden soll, einzustellen.

4. Gleitmodul (10) nach Anspruch 3, wobei der Einstellteil (142) eine Schnurlängenjustiervorrichtung umfasst, die dafür ausgebildet ist, Längen mehrerer Schnüre einzustellen, die in dem Luftwiderstandselement (120) angeordnet sind, und somit die Betriebsrichtung oder Geschwindigkeit des Luftwiderstandselements (120) zu steuern.

5. Gleitmodul (10) nach Anspruch 1, wobei die zuvor eingegebene Bedingung von der Kombination von mindestens einem oder mehreren von Flughöhe und Neigungswinkel des unbemannten Luftfahrzeugsystems, an dem das Gleitmodul (10) montiert ist, einem von einem räumlich abgesetzten Ort empfangenen externen Befehl, einem Änderungsbetrag pro Zeiteinheit in der Flughöhe, einem Änderungsbetrag pro Zeiteinheit im Neigungswinkel und einem Betriebsanomalie-Alarm des unbemannten Luftfahrzeugsystems gebildet ist.

6. Unbemanntes Luftfahrzeugsystem, umfassend das Gleitmodul (10) nach Anspruch 1.

7. Unbemanntes Luftfahrzeugsystem nach Anspruch 6, wobei das Gleitmodul (10) in das unbemannte Luftfahrzeugsystem eingebettet und mit dem unbemannten Luftfahrzeugsystem zu einem einzigen Körper integriert ist.

## Revendications

1. Module de vol plané (10) destiné à être monté sur un système d'aéronef sans pilote, le module de vol plané (10) comprenant :
un contenant (110) comportant un espace de stockage à l'intérieur ;
un organe de résistance à l'air (120) stocké dans le contenant (110) ;
un organe d'éjection (130) effectuant une éjection de l'organe de résistance à l'air (120) ;
un organe de vol plané (140) effectuant un vol plané de l'organe de résistance à l'air (120) ; et
un organe de commande de vol plané (150) commandant l'organe d'éjection (130) et l'organe de vol plané (140),
dans lequel l'organe de commande de vol plané (150) est configuré pour effectuer un vol autonome selon une condition saisie précédemment en commandant le vol plané de l'organe de résistance à l'air (120),
dans lequel l'organe d'éjection (130) comprend une partie d'aide à l'éjection (131) qui est configurée pour ouvrir le contenant (110) de manière électrique,
dans lequel la partie d'aide à l'éjection (131) comprend un dispositif élastique (133) relié au contenant (110) et à l'organe de résistance à l'air (120),
**caractérisé en ce**
**que** le dispositif élastique (133) est formé d'un alliage à mémoire de forme, et est configuré pour éjecter l'organe de résistance à l'air (120) vers l'extérieur du contenant (110) à l'aide d'une force élastique de l'alliage à mémoire de forme générée lorsque l'alliage à mémoire de forme revient à sa forme prédéformée lors de l'application de l'électricité au dispositif élastique (133).

2. Module de vol plané (10) selon la revendication 1, dans lequel l'organe de résistance à l'air (120) est un parachute.

3. Module de vol plané (10) selon la revendication 1, dans lequel l'organe de vol plané (140) est configuré pour régler l'organe de résistance à l'air (120), et comprend en outre une partie de réglage (142) qui est configurée pour régler une vitesse de vol ou une direction de vol du système d'aéronef sans pilote sur lequel doit être monté le module de vol plané (10).

4. Module de vol plané (10) selon la revendication 3, dans lequel la partie de réglage (142) comprend un dispositif de réglage de longueur de corde qui est configuré pour régler les longueurs d'une pluralité de cordes prévues dans l'organe de résistance à l'air (120) et commander ainsi une direction ou une vélocité de fonctionnement de l'organe de résistance à l'air (120).

5. Module de vol plané (10) selon la revendication 1, dans lequel la condition saisie précédemment est configurée par la combinaison d'au moins un ou plusieurs parmi une altitude de vol et un angle d'inclinaison du système d'aéronef sans pilote sur lequel est monté le module de vol plané (10), un ordre extérieur reçu en provenance d'un emplacement distant, une quantité de changement par période de temps unitaire dans l'altitude de vol, une quantité de changement par période de temps unitaire dans l'angle d'inclinaison, et une alarme de fonctionnement anormal du système d'aéronef sans pilote.

6. Système d'aéronef sans pilote comprenant le module de vol plané (10) de la revendication 1.

7. Système d'aéronef sans pilote selon la revendication 6, dans lequel le module de vol plané (10) est incorporé et intégré au système d'aéronef sans pilote en un seul corps.
